# EUROPEAN PATENT APPLICATION

(11) **EP 2 043 360 A2**
(43) Date of publication of application: **01.04.2009**
(21) Application number: 08252931.4
(22) Date of filing: 03.09.2008
(51) Int. Cl.: H04N 5/235

(54) **Dual mode camera apparatus, system, and method**

(30) Priority: 27.09.2007 US 863093
(71) Applicant: OmniVision Technologies Inc., Sunnyvale CA 94089 (US)
(72) Inventor: Li, Hongjun, San Jose, CA 95129 (US); He, James Xinping, San Jose, CA 95148 (US); Yang, Henry Hongli, Saratoga, CA 95070 (US)
(74) Representative: Hackney, Nigel John

(57) **Abstract**

A camera solution includes an image sensor and an image processing and control system. At least two different operating modes are supported, with one of the modes having a higher dynamic range. Control of the dynamic range is provided at the system level. The system supports statically or dynamically selecting an operating mode that determines the dynamic range of a camera. In one implementation, the system supports the use of either a conventional image sensor that does not natively support a high dynamic range or a dual-mode image sensor.

## Description

The present invention is generally related to digital cameras having an image sensor with an array of pixels. More particularly, the present invention is directed to cameras having a high dynamic range.

Conventional CMOS image sensors used in consumer products have a dynamic range that is typically limited to about 60-70 dB. One problem caused by a narrow dynamic range is that it is difficult to achieve a good image quality when there is a high contrast between very bright and very dark objects mixed in a field.

There is increasing interest in using high dynamic range complementary metal oxide semiconductor (CMOS) image sensors in consumer applications, such as in automobile cameras. In many applications a high dynamic range of 90-100 dB is desired. While high dynamic range CMOS image sensors are known in the prior art, they typically impose other system tradeoffs. As one example, the attainment of a high dynamic range often comes as a tradeoff of another image sensor attribute, such as sensitivity or resolution. Additionally, a CMOS image sensor that is specialized to achieve a high dynamic range may be comparatively expensive. Moreover, prior art high dynamic range image sensor chips typically do not permit flexible control over dynamic range at the system level.

Therefore, in light of these problems the dual mode camera solution of the present invention was developed.
Accordingly, in the first aspect, the present invention provides a dual mode camera according to Claim 1.

Preferably a dual mode camera solution provides system control over the dynamic range. A first portion of the system includes an image sensor. A second portion of the system includes an image signal processor, a buffer, and a dynamic range mode controller. The dynamic range mode controller selects the operating mode of the camera system. One operating mode has a normal dynamic range that is less than a high dynamic range (a non-HDR operating mode). Another operating mode has a high dynamic range (HDR operating mode). System control permits the operating mode to be selected in various ways, depending on application requirements such as a static selection of one operating mode or a dynamic selection of operating mode based on environmental conditions. System control also permits different types of image sensors to be used in the system, including image sensors that natively support HDR and non-HDR operating modes as well as image sensors that natively support only a non-HDR operating mode.

### BRIEF DESCRIPTION OF THE FIGURES

The invention is more fully appreciated in connection with the following detailed description taken in conjunction with the accompanying drawings, in which:

FIGURE 1 is a block diagram of a dual-mode camera system in accordance with one embodiment of the present invention;

FIGURE 2 illustrates an implementation of the dual-mode camera system with a dual-mode image sensor in accordance with one embodiment of the present invention; and

FIGURES 3A and 3B illustrate the implementation of the dual-mode camera system with a conventional image sensor in accordance with one embodiment of the present invention.
Like reference numerals refer to corresponding parts throughout the several views of the drawings.

### DETAILED DESCRIPTION OF THE EMBODIMENTS OF THE INVENTION

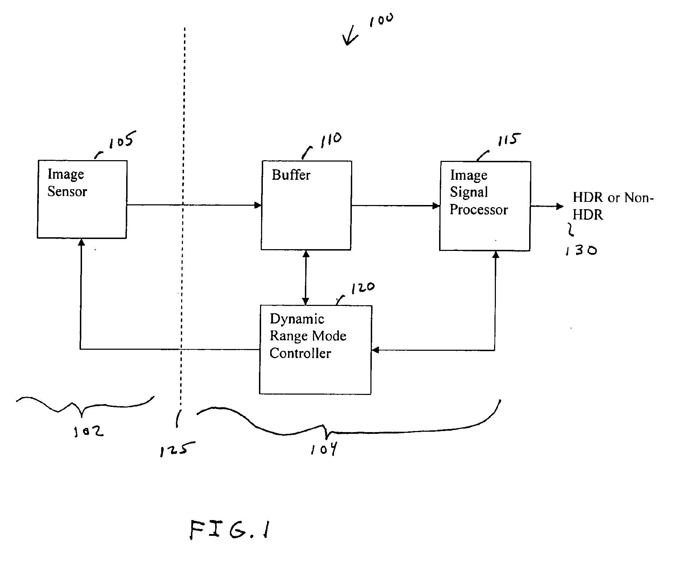

Figure 1 is a block diagram illustrating a camera system 100 in accordance with one embodiment of the present invention with some conventional components omitted for clarity. The camera system 100 can be considered as having two portions. A first portion 102 includes an image sensor 105 having an array of pixels. In one embodiment image sensor 105 is a CMOS image sensor. Image sensor 105 generates image signals, where each image signal corresponds to raw (unprocessed) pixel data of an image.

A second portion 104 is an image processing and control portion of the system. Second portion 104 includes a buffer 110 to buffer image signals, image signal processor 115, and dynamic range mode controller 120. It will be understood that the function of the image signal processor 115 may be implemented using a digital signal processor or other suitable processor capable of processing image signals. As described below in more detail, dynamic range mode controller 120 is preferably designed to support system control over the dynamic range, may be programmed to support the use of different types of image sensors, and may also have a switching response that is programmable at a system level for a particular application.

As indicated by dashed line 125, in an exemplary camera solution the two portions 102 and 104 are formed from separate components along with signal connections (indicated by arrow-ended lines) to couple signals between the separate components. In one embodiment, image sensor 105 resides on a first chip and image signal processor 115 resides on a second chip. Buffer 110 may be formed from memory elements separate from image signal processor 115.

From the standpoint of system design it is desirable to provide the system designer with the capability to control the dynamic range at a system level from portion 104. In one embodiment there are two different operating modes corresponding to a high dynamic range (HDR) mode and a normal mode (non-HDR) of digital images at output 130. In one implementation the normal (non-HDR) operating mode corresponds to a conventional dynamic range of 60-70 dB significantly less than HDR and the HDR operating mode has at least about a 90-100 dB dynamic range. In this implementation the output 130 of the image signal processor 115 is either a high dynamic range (HDR) image or a non-HDR image. A high dynamic range is particularly useful in applications in which there is a high contrast between bright and dark images. However, there are typically various system tradeoffs required to achieve a high dynamic range, such as a potential reduction in sensitivity or resolution compared with a normal dynamic range, depending on the manner in which the HDR operating mode is implemented. Thus, when HDR is not required there are potential advantages to switching over to a normal (non-HDR) operating mode.

In one implementation the dynamic range mode controller 120 is programmable to permit either a static selection of one operating mode or a dynamic selection of operating mode. For the case of a static selection of operating mode the dynamic range mode controller 120 is programmed to operate using a single operating mode (e.g., either HDR or non-HDR). For example, for a particular application it may be preferable to program the dynamic range mode controller 120 to use a single operating mode. For the case of dynamic selection of operating mode the dynamic range mode controller 120 uses image quality criteria to determine how the operating mode is switched as environmental conditions change. It will be understood that the image quality criteria that determine how the operating mode is switched as environmental conditions changes may be set at a system level, such as by using a set of programmable criteria for a particular end-use application.

In one embodiment of dynamic selection of the operating mode, the dynamic range mode controller 120 actively monitors environmental conditions and in response dynamically selects an operating mode. Environmental conditions may be monitored by dynamic range mode controller 120 in various ways. In one embodiment dynamic range mode controller 120 performs an independent analysis of environmental conditions that affect image quality by, for example, monitoring the image signal (s) in the contents of buffer 110. However, more generally dynamic range mode controller 120 may also receive input data from image signal processor 115 to calibrate its monitoring of environmental conditions, such as information on previously processed images.

HDR is typically desirable, for example, when the incoming light to the image sensor has a highly non-uniform intensity variation corresponding to a large contrast between bright and dark regions. For example, the system may detect regions of an image that are overexposed or too dark using, for example, a histogram of exposure times and the output of individual pixel regions. For example, if the dynamic range is too low for current environmental conditions individual pixels may have an output corresponding to a saturated condition. Conversely, if the dynamic range is higher than necessary for current environmental conditions, the output of individual pixels may be at a comparatively low level throughout an image. The dynamic range mode controller 120 may be programmed to make a switching decision based on statistical attributes of the signal level across an image signal that affect image quality and hence may make a change in operating mode desirable. As illustrative examples, the dynamic range mode controller 120 may be programmed to make a decision to switch the operating mode based on criteria indicative of the distribution of bright and dark regions across an image signal such as: the average image signal level, maximum image signal level, minimum image signal level, mean image signal level, median image signal level, or other statistical indictors of the pattern of bright and dark regions across the image signal. As one example, the signal level attributes can for example, be compared to archived data on signal level attributes for bright and dark environmental conditions for selected exposure parameters to determine when a statistically significant number and/or distribution of pixels have a saturated output indicating that a high dynamic range is desirable.

In a specific application it may be desirable to program the image quality criteria used to make dynamic switching decisions that are optimized at a system level for specific applications. As previously described, in many applications achieving a high dynamic range comes at the cost of a tradeoff of some other sensor attribute, such as a lower sensitivity or lower resolution. As an illustrative example, in an automobile application the image quality criteria used to make decisions to switch over from non-HDR to HDR may be optimized for driving safety. In contrast, in a camera used to take digital still images the decision threshold to switch over from non-HDR to HDR may be selected to provide the most aesthetically pleasing viewing experience for still images.

As indicated in Figure 1, dynamic range mode controller 120 generates control signals to direct other components to implement the selected operating mode. The precise nature of the control signals depends on the manner in which other components are implemented and the requirements of individual components to adapt their function to the current operating mode. For example, if buffer 110 and image signal processor 115 require notification of the current operating mode, dynamic range mode controller 120 is implemented to provide them with a notification of the current dynamic range mode. Image sensor 105 receives a notification that depends, in part, on the sophistication of image sensor 105. For example, if image sensor 105 includes a local mode controller, a simple mode notification message is provided by dynamic range mode controller. However, more generally dynamic range mode controller 120 can be implemented to provide a set of operating inputs to image sensor 105, such as exposure times and gain parameters, as described below in more detail.

As is well known in the art of image sensors, a single CMOS image sensor using a single exposure time and constant gain has a characteristic output response that saturates with increasing light intensity, which limits the dynamic range. However, a variety of techniques may be used to effectively combine several different output characteristics (e.g., from different CMOS image sensors or from the same CMOS image sensor operated in different ways at different sampling times) to achieve HDR. An exemplary set of image sensor methods to achieve a HDR will now be described. One technique to achieve a dual mode image sensor is to use an image sensor that has two sensor arrays. For the HDR mode, each of the sensor arrays uses different exposure times (the difference can be fixed or auto adjusted) and then the image signal processor combines the resulting two images (with different exposure times) together to achieve a high dynamic range result. For a non-HDR mode, the sensor arrays can use the same exposure time. Another technique is to use a single sensor operated to generate image signals that can be combined to achieve a high dynamic range result. In one implementation, a single sensor array uses different exposure times (one exposure time is very short and doesn't affect another exposure), and then the image signals are combined together on the image signal processor to achieve the high dynamic range result. A variation is that a single sensor array exposes and reads out once, and then exposes and reads out again with a different exposure time, and then the system combines the two images together to achieve a high dynamic range result. Another variation is that a single sensor array uses the same exposure time and different read out circuits to get different luminance levels on two images, and then the images are combined together to achieve a high dynamic range result.

OmniVision Technologies, Inc., the assignee of the present invention, has pioneered a variety of CMOS image sensors that support both HDR and non-HDR modes. As one example, HDR may be supported in a down-sampling mode. As another example, each unit pixel may have a short exposure photodiode and a long exposure photodiode. Examples of image sensors that are designed to support both HDR and non-HDR are described in the following U.S. patent applications by the assignee of the present invention: 60/947,347 filed on June 29, 2007 and 11/849,129 filed August 31, 2007, the contents of which are hereby incorporated by reference.

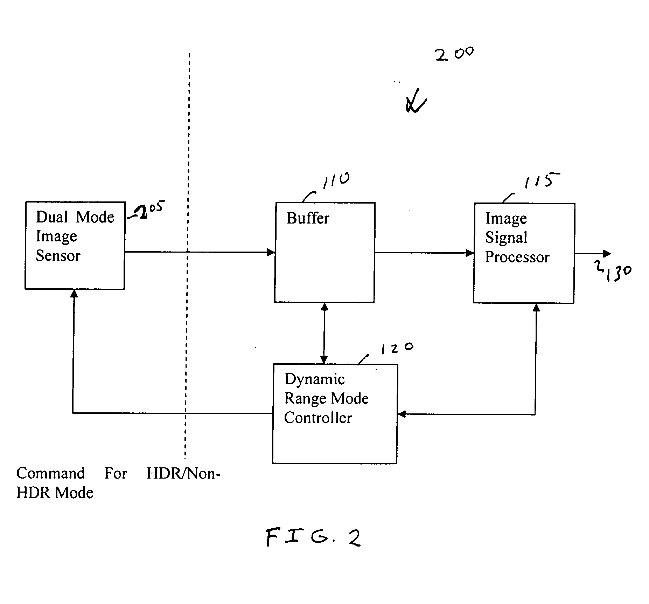

Figure 2 illustrates an example of a camera system 200 where the image sensor is a dual mode image sensor 205 designed to natively support both HDR and non-HDR modes. In this example, the dynamic range mode controller 120 directs the dual mode image sensor 205 to operate in one of the two modes of image sensor 205.

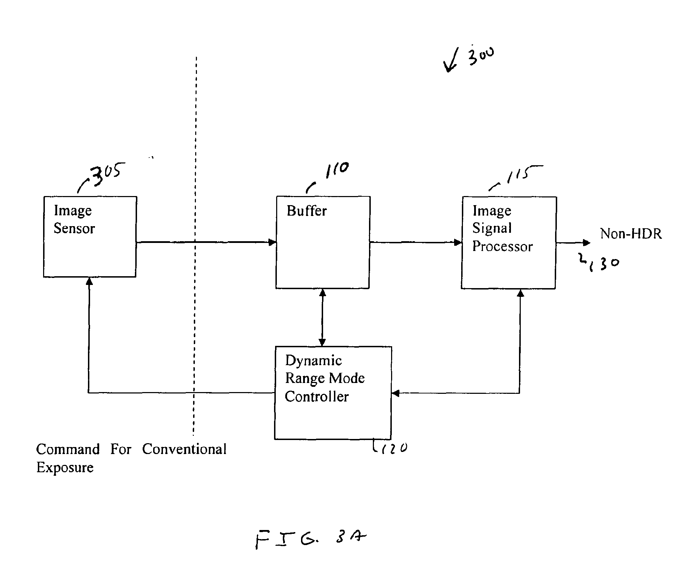

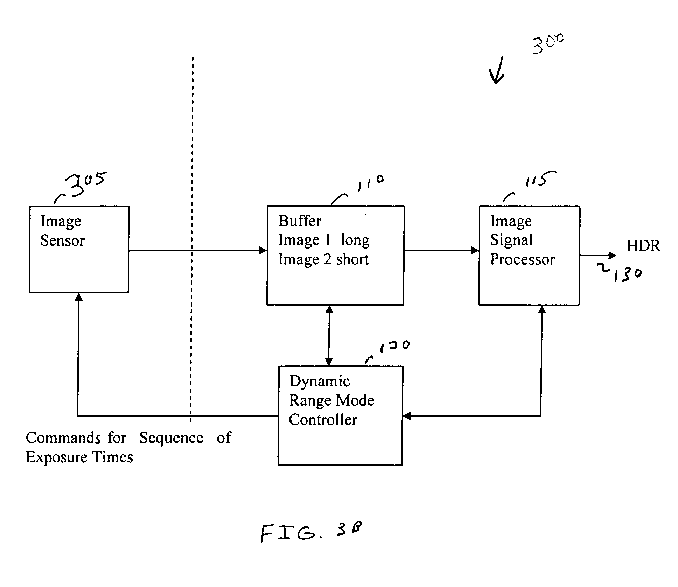

Figures 3A and 3B illustrate an example of a camera system 300 in which the image sensor is an image sensor 305 that natively supports only a non-HDR mode of operation. As illustrated in Figure 3A, when the dynamic range mode controller 120 selects the non-HDR mode it directs the image sensor to take a conventional single exposure. However, as illustrated in Figure 3B, when the dynamic range mode controller 120 selects the HDR mode, it directs image sensor 305 to generate a sequence of image signals with different exposure parameters (e.g., dual-sampling to extend the dynamic range). That is, the system controls image sensor exposure time and image data read out to get long and short exposure images, stores the images on buffer 110, and then uses the image signal processor 115 to combine the image signals together to get a high dynamic range image signal. As an illustrative example, for a sequence of two image signals, one of the image signals has a long exposure time and the other a short exposure time. For the HDR operating mode, buffer 110 buffers the sequence of image signals having different exposure times and image signal processor 115 combines the image signals with different exposure times into a single image with a high dynamic range.

Providing system control of dynamic range is beneficial in several different ways. One benefit of providing system control of the operating mode is that the image processing and control portions of the system can be designed to support either a dual mode image sensor 205 or a conventional image sensor 305. From the standpoint of system design, it is highly desirable to have a generic system design in which different types of image sensors can be used. For example, conventional image sensors 305 that natively support only a normal dynamic range are commonly available in commercial quantities. In contrast, dual-mode image sensors 205 require a custom design and hence are likely to be more expensive.

Another benefit of providing system control of the operating mode is that a generic camera system can have its mode of operation adapted based on the particular application the camera system is used for and also on environmental conditions. System control of the operating mode permits the selection of the operating mode to be programmed for particular application either statically (i.e., HDR or non-HDR) or dynamically based on environmental conditions. Additionally, system control permits the criteria used to make switching decisions in the dynamic mode to be based on programmable criteria optimized for specific applications.

Various extensions and modifications are contemplated. The previous examples were for the case that that there are only two operating modes with different dynamic ranges (i.e., HDR and non-HDR). However, it will be understood that the present invention includes embodiments in which there are more than two different operating modes (e.g., highest dynamic range mode, medium dynamic range mode, and a "low" dynamic range mode). For example, three image signals could be combined for the highest dynamic range mode, two image signals combined for a medium dynamic range mode, and a single image signal used for the low dynamic range mode.

The foregoing description, for purposes of explanation, used specific nomenclature to provide a thorough understanding of the invention. However, it will be apparent to one skilled in the art that specific details are not required in order to practice the invention. Thus, the foregoing descriptions of specific embodiments of the invention are presented for purposes of illustration and description. They are not intended to be exhaustive or to limit the invention to the precise forms disclosed; obviously, many modifications and variations are possible in view of the above teachings. The embodiments were chosen and described in order to best explain the principles of the invention and its practical applications, they thereby enable others skilled in the art to best utilize the invention and various embodiments with various modifications as are suited to the particular use contemplated. It is intended that the following claims and their equivalents define the scope of the invention

## Claims

1. A dual-mode camera system in which control of the dynamic range is provided at a system level, comprising:
an image processing and control system, including:
a buffer for image signals received from an image sensor having an array of pixels;
an image processor receiving buffered image signals from the buffer; and
a dynamic range mode controller within the image processing and control system selecting an operating mode of the camera system, the operating modes including a first operating mode and a second operating mode, the first operating mode having a high dynamic range (HDR) and the second operating mode having a normal dynamic range that is not HDR (non-HDR).

2. The camera system of claim 1, wherein the dynamic range mode controller is programmable to statically select the operating mode to be one of the operating modes.

3. The camera system of claim 1, wherein the dynamic range mode controller dynamically selects the operating mode based on environmental conditions.

4. The camera system of claim 1, wherein the image sensor does not natively support HDR and the dynamic range mode controller implements the first operating mode by adjusting the exposure time of sets of at least two successive image signals taken by the image sensor array with different exposure times with the image processor combining at least two image signals having different exposure times to form an individual digital image having the high dynamic range.

5. The camera system of claim 1, wherein the image sensor natively supports HDR and non-HDR operating modes, the dynamic range mode controller directing the image sensor to select between HDR and non-HDR operating modes.

6. The camera system of claim 1, wherein the dynamic range mode controller supports the use of image sensors of different types, the dynamic range mode controller when the image sensor does not natively support HDR implementing the first operating mode by adjusting the exposure time of sets of at least two successive image signals taken by the image sensor array to have different exposure times with the image processor combining at least two image signals having different exposure times to form an individual digital image having the high dynamic range, and the dynamic range mode controller when the image sensor natively supports both operating modes directing the image sensor to select between HDR and non-HDR operating modes.

7. The camera system of claim 1, wherein the dynamic range mode controller dynamically selects the operating mode by detecting environmental conditions and in response to detecting that a normal dynamic range is required selecting the second operating mode in which the image sensor is operated to generate images with a normal dynamic range and the dynamic range mode controller in response to detecting an extended dynamic range is required selecting the first operating mode in which the image sensor is operated to generate a high dynamic range.

8. A dual-mode camera in which control of the dynamic range is provided at a system level, comprising:
an image sensor array having an array of pixels; and
an image processing and control system, including:
an image processor to process image signals received from the image sensor array and generate digital images; and
a dynamic range mode controller in the image processing and control system to select an operating mode of the camera, the operating modes including a first operating mode and a second operating mode, the first operating mode having a high dynamic range (HDR) and the second operating mode having a normal dynamic range that is not HDR (non-HDR).

9. The camera of claim 8, wherein the dynamic range mode controller supports both static and dynamic selection of the operating mode.

10. The camera of claim 8, wherein the operating mode is dynamically selected based on at least one image quality criterion affected by environmental conditions.

11. The camera of claim 8, wherein said image sensor array formed on a first chip, the image processor and the dynamic range mode controller being formed on at least one other chip.

12. The camera of claim 8, wherein the image sensor array has a fixed dynamic range less than the high dynamic range for each individual image signal generated by the image sensor array, the image processor in the first operating mode combining at least two image signals having different exposure times to form an individual digital image having the high dynamic range with the dynamic range mode controller adjusting the exposure time of sets of at least two successive image signals taken by the image sensor array to have different exposure times and a buffer is provided to buffer individual sets of image signals having different exposure times.

13. The camera of claim 12, wherein in the second operating mode each digital image is formed from a single image signal.

14. The camera of claim 8, wherein the operating mode is dynamically selected based on image quality criteria that includes a contrast criterion, the dynamic range mode controller dynamically selecting the operating mode based on whether the contrast between bright and dark requires an extended dynamic range.

15. The camera of claim 8, wherein the dynamic range mode controller selects the operating mode based on programmable criteria.

16. A dual-mode camera in which the dynamic range is adapted to changing environmental conditions, comprising:
an image sensor having an array of pixels formed on a first chip;
an image processing and control system, including:
a buffer for image signals received from the image sensor;
a processor formed on a second chip, the processor processing buffered image signals from the buffer to generate digital images; and
a dynamic range mode controller within the image processing and control system to select an operating mode based on environmental conditions, the dynamic range mode controller in response to detecting an extended dynamic range is required selecting a first operating mode in which the image sensor is operated to generate a high dynamic range and in response to detecting that a normal dynamic range that is not HDR (non-HDR) is required selecting a second operating mode in which the image sensor is operated to generate images with a non-HDR dynamic range.

17. The camera of claim 16, wherein said dynamic range mode controller has a programmable switching response.

18. The camera of claim 16, wherein the image sensor has a fixed dynamic range for a single image signal and a high dynamic range is achieved for the first operating mode by generating control signals to direct the image sensor to adjust the exposure time of sets of at least two successive image signals taken by the image sensor to have different exposure times, the processor combining data from sets of successive image signals with different exposure times to achieve a high dynamic range.

19. The camera of claim 8 or claim 16, wherein the image sensor is a dual-mode image sensor array supporting both the first operating mode and the second operating mode, the dynamic range mode controller selecting the operating mode of the image sensor.
